# EUROPÄISCHE PATENTSCHRIFT

(11) **EP 2 188 548 B1**
(45) Veröffentlichungstag und Bekanntmachung des Hinweises auf die Patenterteilung: **15.02.2012**
(21) Anmeldenummer: 08784400.7
(22) Anmeldetag: 30.07.2008
(51) Int. Cl.: F16F 13/14

(54) **ELASTOMERES BUCHSENLAGER MIT HYDRAULISCHER DÄMPFUNG**
ELASTOMERIC SLEEVE MOUNT WITH HYDRAULIC DAMPING
PALIER À DOUILLE ÉLASTOMÈRE ET AMORTISSEMENT HYDRAULIQUE

(30) Priorität: 14.08.2007 DE 102007038493
(43) Veröffentlichungstag der Anmeldung: 26.05.2010
(73) Patentinhaber: ZF Friedrichshafen AG, 88038 Friedrichshafen (DE)
(72) Erfinder: SCHMITZ, Michael, 53115 Bonn (DE)
(86) Internationale Anmeldenummer: PCT/DE2008/050016
(87) Internationale Veröffentlichungsnummer: WO 2009/021505

(56) Entgegenhaltungen:
- EP-A- 0 460 278
- EP-A- 0 543 082
- EP-A- 0 600 358
- EP-A- 1 582 764
- DE-A1- 3 818 287
- DE-A1- 3 833 451
- DE-A1- 3 942 655
- DE-A1- 4 307 559
- DE-A1- 10 213 627
- DE-A1- 10 315 247
- DE-A1-102005 018 211
- DE-B4-102006 045 051
- DE-C1- 3 905 686
- FR-A- 2 739 153
- JP-U- 2 081 941

## Beschreibung

Die Erfindung betrifft ein elastomeres Buchsenlager mit hydraulischer Dämpfung, nämlich eine Hydrobuchse. Sie bezieht sich auf ein gattungsgemäßes Elastomerlager mit mindestens einem Paar als aktive Arbeitskammern arbeitender, das heißt mit einer Pumpwirkung ausgestatteter Blähkammern, deren sie begrenzende Blähwände zur Gewährleistung einer hohen Dauerhaltbarkeit des Lagers in spezieller Weise an die übrigen Teile des Lagerkörpers angebunden sind.

Die DE 3833451 A1 offenbart ein Lager gemäß Oberbegriff des Anspruchs 1.

Es ist bekannt, elastomere Buchsenlager insbesondere für die Verwendung im Automobilbau zur Lagerung von Komponenten des Fahrwerks mit einer hydraulischen Dämpfung auszustatten. Entsprechende Lager bestehen aus einem rohr- oder zylinderförmigen, meist metallischen Innenteil, einer dieses Innenteil konzentrisch oder exzentrisch umgebenden, im Allgemeinen ebenfalls metallischen Außenhülse sowie einem zwischen dem Innenteil und der Außenhülse angeordneten elastomeren Lagerkörper. Zur Unterstützung des Dämpfungsverhaltens des Lagerkörpers ist ein hydraulisches System vorgesehen, welches aus mindestens einem Paar, in dem Lagerkörper oder zwischen dem Lagerkörper und der Außenhülse ausgebildeten Kammern zur Aufnahme eines fluiden Dämpfungsmittels und mindestens einem diese Kammern miteinander verbindenden Kanal besteht. Bezogen auf die Lagerumfangsrichtung sind die Kammern durch zwischen dem Innenteil und der Außenhülse angeordnete Stege des elastomeren Lagerkörpers räumlich voneinander getrennt. Sie sind ferner in der axialen Richtung durch sich von den axialen Lagerenden in axialer Richtung in das Lagerinnere erstreckende Nieren begrenzt, von welchen sie durch sich aus dem Lagerinnern axial sowie radial gewölbt nach außen erstreckende Kammerwände getrennt sind. Die das Dämpfungsmittel aufnehmenden Kammern werden als Blähkammern und die sie begrenzenden Wände als Blähwände bezeichnet, wobei die gewölbten Blähwände den Kammern eine Pumpwirkung verleihen, durch welche, im Falle einer radial auf eine Kammer einwirkenden Last, das von der betreffenden Blähkammer aufgenommene Dämpfungsmittel über den Kanal in die jeweils andere Blähammer gepumpt wird. Dabei sind durch die Wölbung der Blähwände lange Verformungswege gegeben, welche die Dauerhaltbarkeit des Lagers begünstigen und bei hohen radial, in Form schockartiger Stöße auf das Lager einwirkenden Kräften eine niedrige dynamische Verhärtung des Elastomers des Lagerkörpers gewährleisten. Hydrolager der beschriebenen Art sind beispielsweise aus der DE 38 18 287 A1 und der DE 102 13 627 A1 bekannt.

Es hat sich jedoch gezeigt, dass durch hohe radiale Belastungen, welche große Verformungswege bewirken, und im praktischen Einsatz häufig gleichzeitig auftretende starke torsionale Belastungen die Dauerhaltbarkeit der Lager verringert wird. Dabei führen radiale Belastungen, sofern sie von großen an dem Lagerkörper verursachten Drehwinkeln überlagert werden, insbesondere im Bereich der Anbindung der Blähwände an die übrigen Teile des Lagerkörpers zu Dauerhaltbarkeitsproblemen. Besonders kritisch ist hierbei die Anbindung der Blähwände im Bereich eines zumeist zur Ausbildung des Kanals in den Lagerkörper einvulkanisierten Kanalträgerelements. Hier können Risse auftreten und über diese gegebenenfalls das Dämpfungsmittel aus den Kammern austreten.

Die Belastung der Kammerwände kann herabgesetzt werden, wenn diese gegenüber den übrigen Bereichen des Lagerkörpers zumindest teilweise freigestellt, das heißt nur punktuell an den Lagerkörper angebunden werden, so dass den Kammerwänden noch größere Verformungswege ermöglicht werden. So ist beispielsweise aus der EP 0 600 358 A2 eine Hydrobuchse bekannt, bei welcher eine der Kammern als eine freihängende Kammer, das heißt mit einer nur punktuell angebundenen Kammerwand ausgebildet ist. Bei dem in der Schrift beschriebenen Lager ist jedoch die freihängende Kammer eine passive, nicht als Blähkammer aufzufassende Kammer ausgebildet, welche lediglich dazu dient, gegebenenfalls aus der ihr gegenüberliegenden aktiven Kammer verdrängtes Dämpfungsmittel aufzunehmen, welche aber nicht mit einer Pumpwirkung ausgestattet ist. Eine besonders wirkungsvolle Unterstützung der Dämpfung durch das fluide Dämpfungssystem wird jedoch nur mittels aktiver, mit einer Pumpwirkung ausgestatteter Kammern erreicht. Insoweit wird die Dämpfungswirkung des in der vorgenannten Schrift beschriebenen Lagers hauptsächlich in Bezug auf solche radialen Kräfte unterstützt, welche im Umfangsbereich der aktiven, mit einer Pumpwirkung ausgestatteten Kammer einwirken. Um die Dämpfungswirkung in einem anderen, beispielsweise der aktiven Kammer gegenüberliegenden Umfangsbereich ebenfalls durch das hydraulische System zu unterstützen, wäre es daher erforderlich, bei dem gemäß der Schrift ausgebildeten Lager ein weiteres Kammerpaar mit einer aktiven Kammer in dem betreffenden Umfangsbereich vorzusehen.

Ferner hat sich gezeigt, dass durch eine teilweise Freistellung der Kammerwände zwar deren Belastung im Bereich ihrer Anbindung an den Lagerkörper herabgesetzt wird, dass aber die Stege des Lagerkörpers weiterhin dauerlaufkritisch sind.

Aufgabe der Erfindung ist es daher, eine Hydrobuchse derart auszubilden, dass bei dieser die Materialbelastung im Bereich der Anbindung der Kammerwände an den Lagerkörper im Falle hoher, durch starke torsionale Kräfte überlagerte Radialkräfte verringert und gleichzeitig die Dauerlauffestigkeit der Stege verbessert wird.

Die Aufgabe wird durch ein elastomeres Buchsenlager mit den Merkmalen des Hauptanspruchs gelöst. Vorteilhafte Aus- beziehungsweise Weiterbildungen der Erfindung sind durch die Unteransprüche gegeben.

Das zur Lösung der Aufgabe vorgeschlagene elastomere Buchsenlager besteht, wie an sich bekannt, aus einem rohr- oder zylinderförmigen, vorzugsweise metallischen Innenteil, einer das Innenteil umgebenden Außenhülse und einem zwischen dem Innenteil und der Außenhülse angeordneten elastomeren Lagerkörper. Dabei können der Lagerkörper und die Außenhülse konzentrisch oder exzentrisch zum Innenteil angeordnet sein. Zur Realisierung einer hydraulischen Dämpfung weist das Lager mindestens ein Paar in dem Lagerkörper oder zwischen dessen Außenkontur und der Außenhülse ausgebildeter Blähkammern zur Aufnahme eines fluiden Dämpfungsmittels auf. Die Blähkammern sind bezüglich der Lagerumfangsrichtung gegeneinander versetzt angeordnet und räumlich durch zwischen dem Innenteil und der Außenhülse ausgebildete Stege des Lagerkörpers voneinander getrennt. Sie arbeiten als aktive Arbeitskammern, welche das Dämpfungsmittel im Falle einer radial auf sie einwirkenden Druckkraft über mindestens einen, die Kammern miteinander verbindenden Kanal in die jeweils andere Blähkammer pumpen. Hierfür sind die Wände der Blähkammern in Form nach außen gewölbter Blähwände ausgebildet, die sich vom Lagerinnern radial und axial nach außen erstrecken. Die Blähwände sind bei dem vorgeschlagenen Lager nur in einem radial äußeren Bereich an die Stege angebunden, in ihrem übrigen Verlauf aber sowohl gegenüber den Stegen als auch gegenüber dem Innenteil des Lagers freigestellt. Aufgrund ihrer Wölbung ergeben sich für die Blähwände, wie auch bei Lagern gemäß dem Stand der Technik bekannt, große Verformungswege, wobei aber durch die erfindungsgemäße Freistellung der Blähwände erreicht wird, dass das Lager auch bei hohen radialen Belastungen und einer gleichzeitig auftretenden torsionalen Beanspruchung nicht beschädigt wird. Bei hoher Auslenkung wird nämlich die belastete Blähwand hauptsächlich auf Biegung beansprucht, während die gegenüberliegende nahezu lastfrei ist, da das Innenteil diese Blähwand nicht "mitzieht" (keine Verbindung zwischen Blähwand und Innenteil). Da somit aufgrund der erfindungsgemäßen Ausbildung des Lagers keine Zugspannungen auf die Blähwände wirken, besteht keine Gefahr, dass der Lagerkörper im Falle einer Überlagerung von radialen und torsionalen Belastungen im Bereich der Anbindung der Blähwände an die Stege einreißt. Hierdurch ist gewährleistet, dass ein ungewolltes Austreten von Dämpfungsmittel verhindert wird. Zudem wirken die freihängenden Blähwandbereiche einer dynamisch hohen Verhärtung des Lagerkörpers besonders gut entgegen. Das entsprechend ausgebildete Lager verfügt hierdurch bei großer Dauerhaltbarkeit über gute dynamische Eigenschaften.

Zur weiteren Verbesserung der Dauerhaltbarkeit im Bereich der Stege ist das Lager erfindungsgemäß so ausgebildet, dass seine Außenhülse und der durch Vulkanisation mit der Außenhülse verbundene Lagerkörper einschließlich der Stege und der im radial äußeren Bereich an sie angebundenen Blähwände, ein separates Bauteil ausbilden. In dieses als Gummi-Metall-Teil ausgebildete separate Bauteil ist erfindungsgemäß das Innenteil eingeschoben. Das Innenteil weist gegenüber der inneren, es aufnehmenden Geometrie des Gummi-Metall-Teils ein Übermaß auf. Ferner sind an den axialen Enden des Innenteils radial nach außen gerichtete Auskragungen ausgebildet. Diese Auskragungen werden nach dem Einschieben des Innenteils in das aus der Außenhülse und dem Lagerkörper gebildete Gummi-Metall-Teil von Stegblechen hintergriffen, welche radial innen liegend in die Stege einvulkanisiert sind. Dabei werden die Stege vorteilhafter Weise, aufgrund des schon angesprochenen Übermaßes des Innenteils, über die in sie einvulkanisierten Stegbleche mit einer ihre Dauerhaltbarkeit verbessernden Vorspannung beaufschlagt. Zur Ausbildung des die Blähkammern miteinander verbindenden Kanals ist vorzugsweise in einem radial äußeren Bereich des Lagerkörpers, das heißt im Bereich der Anbindung der Blähwände der an den Steg angrenzenden Kammern, ein Kanalträgerelement einvulkanisiert. Dieses Kanalträgerelement bildet gleichzeitig eine Armierung für den Lagerkörper aus. Entsprechend einer möglichen Ausbildungsform des erfindungsgemäßen Lagers ist das Innenteil bezüglich seiner axialen Erstreckung zweigeteilt ausgebildet. Bei dieser Ausbildungsform werden die beiden Teile des Innenteils jeweils von den einander gegenüberliegenden axialen Lagerenden in das separate Gummi-Metall-Teil eingeschoben, wobei der letztendliche Formschluss zwischen den Teilen sowie den Auskragungen des Innenteils und den Stegblechen des Gummi-Metall-Teils erst im Zuge des Verbauens des Lagers am vorgesehenen Einbauort durch dessen, vorzugsweise mittels einer durch das Innenteil geführten Schraube erfolgenden Befestigung bewirkt wird. Bei einer vorteilhaften Weiterbildung dieser Ausbildungsform ist das die Auskragungen bildende Material des Innenteils auf der axial inneren Seite der jeweiligen Auskragung nochmals nach radial innen, das heißt vorzugsweise um ca. 180° gegen die Stegbleche zurückgeschlagen. Hierdurch wird eine zusätzliche radiale Fixierung für die Stegbleche erreicht. Eine radiale Fixierung der Stegbleche in dieser Weise kommt aber vorzugsweise nur bei Lagern mit einem zweiteiligen Innenteil in Betracht, da ein derart ausgebildetes einteiliges Innenteil sich kaum in das aus dem Lagerkörper und der Außenhülse gebildete Gummi-Metall-Teil einschieben lassen würde. Beispielsweise kann das Innenteil zur Ausbildung der die Stegbleche axial fixierenden Auskragungen axial beidseits mehrfach, nämlich zuerst nach radial außen, dann nach axial innen (das heißt in Richtung der axialen Mitte des Lagers) und schließlich nach radial innen abgekantet sein. Für Lager mit einem einteiligen Innenteil kommt allenfalls eine ähnliche Ausbildung in Betracht, bei welcher lediglich auf einer axialen Seite des Innenteils die Auskragung in der vorbeschriebenen Weise zurückgeschlagen ist und folglich die Stegbleche nur an einer axialen Seite radial fixiert sind.

Praxisgerechte Ausbildungsformen des erfindungsgemäßen Lagers sind ferner mit Radialanschlägen ausgestattet, die in den Nieren angeordnet sind, welche an die Kammern axial beidseitig begrenzen. Durch diese Radialanschläge wird im Bereich der Blähkammern der radiale Verformungsweg des Lagerkörpers zum Schutz vor Überlasten begrenzt. Dabei wird der maximale radiale Verformungsweg durch die Höhe bestimmt, mit welcher die Radialanschläge in der radialen Richtung vom Innenteil gegen die Außenhülse aufragen. Im Falle einer geringen Höhe der Radialanschläge können diese als integraler Bestandteil des Innenteils ausgebildet sein, da es die konstruktive Gestaltung des Lagers auch zulässt, ein einteiliges Innenteil unter Erzeugung der Vorspannung für die Stege mit entsprechend flachen Radialanschlägen an den Stegblechen vorbei in das Gummi-Metall-Teil einzuschieben. Sofern der maximal zulässige radiale Verformungsweg durch höher aufragende Radialanschläge stärker begrenzt werden soll, werden die Radialanschläge aber vorzugsweise mittels separater, von den axialen Lagerenden auf das Innenteil aufgeschobener Elemente realisiert. Bei diesen kann es sich von den axialen Enden her auf das Innenteil aufzuschiebende Ringe aus Kunststoff, Metall oder Gummi oder aus einem mit Gummi belegten Kunststoff oder Metall handeln. Insbesondere bei Lagern mit einem einteiligen Innenteil kann dabei die axiale Fixierung der Stegbleche auch ohne ein nochmaliges Zurückschlagen der an den axialen Enden des Innenteils ausgebildeten Auskragungen mit Hilfe der Anschlagringe bewerkstelligt werden.

Neben dem zur Verbindung der Blähkammern und damit zur Unterstützung der Dämpfungswirkung dienenden Kanal kann das Lager mit einem kurzen, als Bypass zu dem erstgenannten Kanal wirkenden Kanal ausgestattet sein, wobei der entsprechende Bypasskanal im Normalbetrieb des Lagers durch ein darin eingeordnetes Sperrelement gesperrt ist und nur bei auftretenden hohen radialen Belastungen kurzzeitig geöffnet wird. Grundsätzlich kann bei der vorgeschlagenen Lagerkonstruktion zwar auf einen solchen Bypasskanal verzichtet werden, da kurzzeitige hohe Belastungen durch die Nachgiebigkeit der freihängenden Blähwand kompensiert werden. Für spezielle Einsatzzwecke kann aber dennoch ein Bypasskanal vorgesehen sein, wobei dieser beziehungsweise das in ihm angeordnete Sperrelement so dimensioniert sein kann, dass sich für hohe Belastungen eine etappenweise Nachgiebigkeit, zuerst durch die freihängende Blähwand und nachfolgend durch die Freigabe des Bypasskanals, ergibt. Zur Abstimmung beziehungsweise Einstellung des radialen Steifigkeitsverhaltens der Stege können außerdem in die Stege zusätzliche Zwischenbleche einvulkanisiert sein. Das erfindungsgemäße Lager ist vorteilhaft dadurch weitergebildet, dass die Stege im Bereich der Anbindung der Kammerwände bezogen auf die Umfangsrichtung schmaler, das heißt mit einer Taillierung ausgebildet sind. Hierdurch wird die Dauerhaltbarkeit des Lagers im Bereich der Anbindung der Blähwände zusätzlich verbessert.

Bei einer vorteilhaften Weiterbildung des erfindungsgemäßen Lager ist in einem Fußabschnitt der Kammern, das heißt in einem vorzugsweise axial mittig gelegenen radialen Innenbereich eine radial nach außen aufragende Ausformung des Lagerkörpers vorgesehen. Die Anordnung eines solchen Nippels beziehungsweise Noppen dient der Vereinfachung der Montage, insbesondere des Einschiebens des Innenteils in das Gummi-Metall-Teil. Dabei ist es möglich, den Fußabschnitt der Kammern, das heißt den entsprechenden Bereich ihrer Blähwände, mittels des Nippels bei der Lagermontage vorübergehend radial nach außen zu ziehen und dadurch das Einschieben des Innenteils zu erleichtern.

Die Erfindung soll nachfolgend anhand eines Ausführungsbeispiels nochmals näher erläutert werden. In den zugehörigen Zeichnungen zeigen:
- Fig. 1:: eine mögliche Ausbildungsform des erfindungsgemäßen Buchsenlagers in radial geschnittener Darstellung,
- Fig. 2:: das Buchsenlager gemäß Fig. 1 mit einem zweiteiligen Innenteil und einem axial durch die Stege geführten Schnitt,
- Fig. 3:: das Lager gemäß Fig. 1 und Fig. 2 mit einem axial durch die Kammern geführten Schnitt,
- Fig. 4:: ein gattungsgemäßes Lager nach dem Stand der Technik.

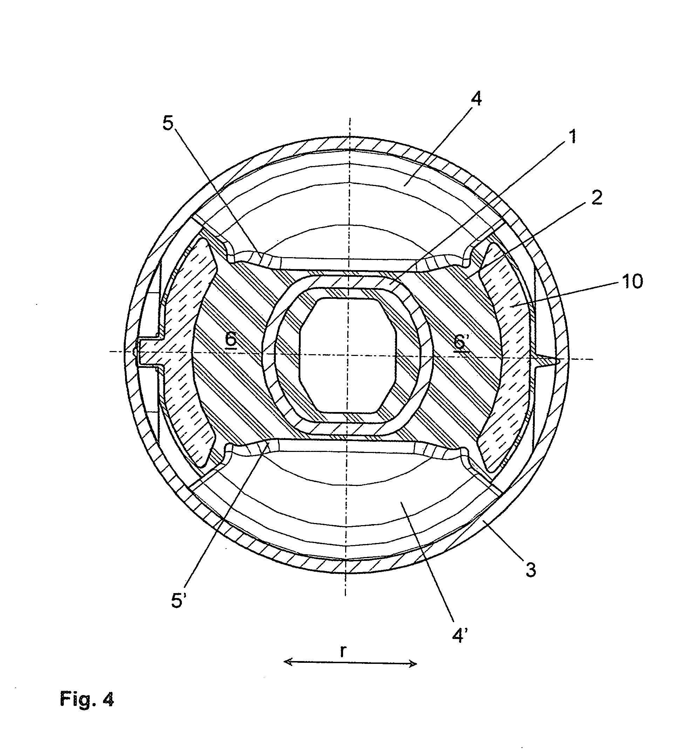

Zur Erläuterung der Erfindung soll zunächst auf die nach dem Stand der Technik übliche Ausbildungsform eines gattungsgemäßen Buchsenlagers gemäß Fig. 4 eingegangen werden.

Das dargestellte Lager beziehungsweise die Hydrobuchse besteht im Wesentlichen aus dem rohrförmigen, metallischen Innenteil 1, der Außenhülse 3 und dem dazwischen angeordneten elastomere Lagerkörper 2, in welchem die Blähkammern 4, 4' für das Dämpfungsmittel ausgebildet sind. Der Lagerkörper 2 bildet, insbesondere für radial auf das Lager einwirkende Kräfte, eine Tragfeder aus, für welche das Innenteil 1 und die Außenhülse 3 stützende Armierungen darstellen. Der Lagerkörper 2 gattungsgemäßer Lager ist, anders als bei dem erfindungsgemäßen Lager, zumeist mit dem Innenteil 1 durch Vulkanisation verbunden. Die beiden, in dem elastomeren Lagerkörper 2 ausgebildeten Blähkammern 4, 4' sind über einen hier nicht erkennbaren Kanal miteinander verbunden.

Zumindest Teile dieses Kanals sind in einem von dem Lagerkörper 2 eingeschlossenen Kanalträgerelement 10 ausgebildet, welches gleichzeitig als zusätzliche Armierung für den Lagerkörper 2 wirkt. Das Innenteil 1 und die Außenhülse 3 bestehen vorzugsweise aus einem metallischen Werkstoff, während das Kanalträgerelement 10 wahlweise aus Metall oder Kunststoff ausgebildet ist. Axial oberhalb und unterhalb der Kammern 4, 4' sind in dieser Darstellung ebenfalls nicht erkennbare Nieren in dem elastomeren Lagerkörper 2 ausgebildet, welche von den axialen Stirnseiten des Lagers in axialer Richtung a in das Lagerinnere hineinragen und von den Blähkammern 4, 4' durch die gewölbt verlaufenden Blähwände 5, 5' getrennt sind. Die Blähwände 5, 5' der Blähkammern 4, 4' sind über ihre gesamte Länge an die Stege 6, 6' beziehungsweise in deren radial äußeren Bereich an das, von dem jeweiligen Steg 6, 6' eingeschlossene Kanalträgerelement 10 angebunden. Im Bereich dieser Anbindung treten bei hohen radialen Belastungen, insbesondere dann, wenn diese Belastungen mit starken Verdrehungen des Lagers gepaart sind, hohe Zugspannungen auf, mit der Folge von Dauerhaltbarkeitsproblemen.

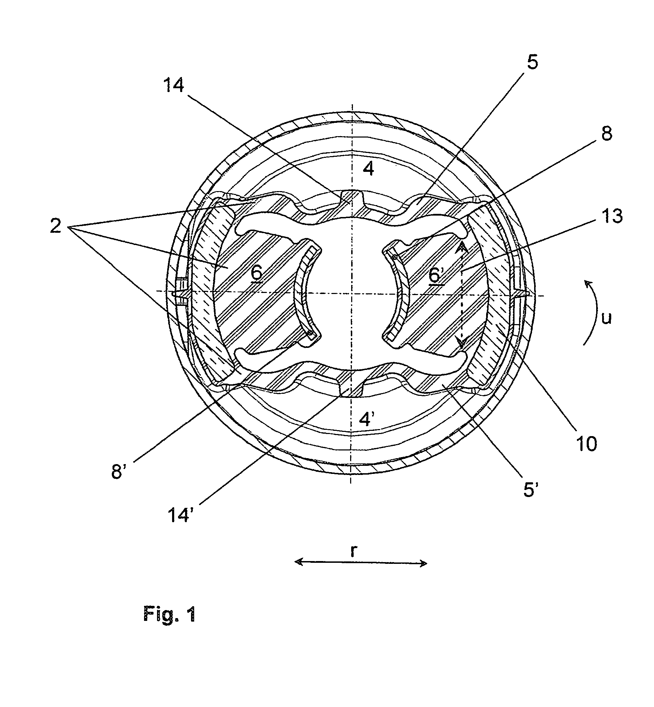

In der Fig. 1 ist eine mögliche Ausbildungsform des erfindungsgemäßen Lagers in einer radial geschnittenen Darstellung gezeigt, wobei das Lager hier vor dem Einschieben des Innenteils 1 wiedergegeben ist. In der Figur ist folglich das aus dem elastomeren Lagerkörper 2 und der mit diesem durch Vulkanisation verbundenen Außenhülse 3 gebildete separate Gummi-Metall-Teil 2, 3 zur Aufnahme des Innenteils 1 dargestellt. In diesem Zusammenhang soll, wie auch schon an anderen Stellen der Beschreibung, von einem Gummi-Metall-Teil 2, 3 gesprochen werden, auch wenn sich die Erfindung selbstverständlich nicht auf die Verwendung von Gummi für den Lagerkörper beschränkt, sondern hierfür gegebenenfalls auch andere elastomere Werkstoffe in Betracht kommen. In der Darstellung deutlich zu erkennen sind die durch eine entsprechende Formgebung des Lagerkörpers ausgebildeten Blähkammern 4, 4' sowie die diese Blähkammern 4, 4' bezüglich der Umfangsrichtung u räumlich voneinander trennenden Stege 6, 6'. Die Kammern 4, 4' werden durch die entsprechende Außenkontur des Lagerkörpers 2 von den Blähwänden 5, 5' und der Innenfläche der Außenhülse 3 begrenzt.

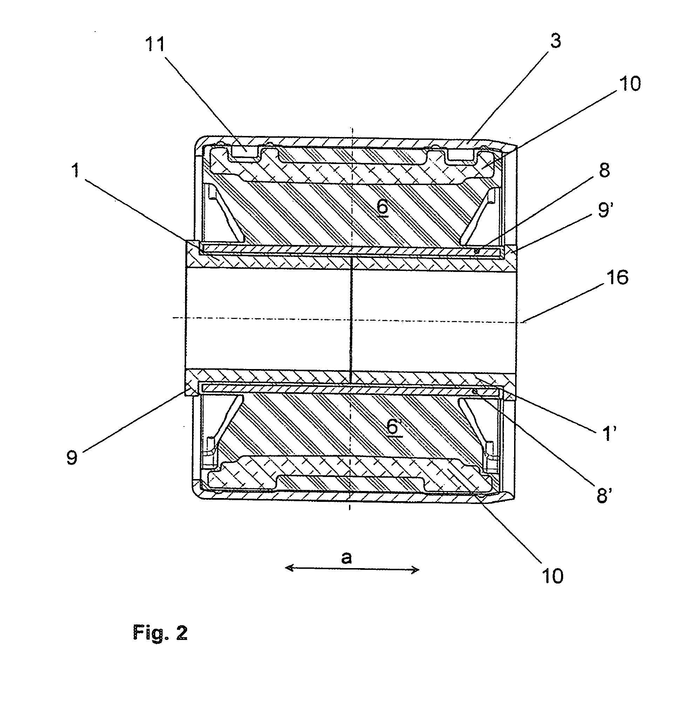

Im Hinblick auf die angestrebte Erhöhung der Dauerhaltbarkeit der Blähwände 5, 5' auch bei großen radialen, gegebenenfalls durch torsionale Kräfte überlagerten Belastungen, sind die Blähwände 5, 5' weitgehend freigestellt, so dass die Blähkammern 4, 4' auch als freihängende Blähkammern 4, 4' bezeichnet werden können. Wie aus der Darstellung zu ersehen ist, sind die Blähwände 5, 5' nur in einem radial äußeren Bereich an die Stege 6, 6' angebunden, im Übrigen aber gegenüber diesen sowie dem Innenteil 1 freigestellt. Im Bereich der Anbindung der Blähwände 5, 5' an die Stege 6, 6' ist in den Lagerkörper 2 ein Armierungselement einvulkanisiert, welches einen Kanalträger 10 für den die Blähkammern 4, 4' miteinander verbindenden Kanal 11 ausbildet. Dem Grundgedanken der Erfindung folgend, sind ferner radial innen in die Stege 6, 6' Stegbleche 8, 8' einvulkanisiert, deren Funktion im Zusammenhang mit den nachfolgenden Ausführungen zur Fig. 2 im Detail erläutert werden soll. Bei der dargestellten Ausführungsform des erfindungsgemäßen Lagers ist an einem bezüglich der Umfangsrichtung mittleren Abschnitt der Blähkammern 4, 4, nämlich im Fußabschnitt 15, 15' der jeweiligen Blähkammer 4, 4', ein Nippel 14, 14' beziehungsweise Noppen an den Lagerkörper 2 angeformt. Mittels dieses Nippels 14, 14' können die Blähwände 5, 5' beim Einfügen des Innenteils 1 nach radial außen gezogen und hierdurch das Einschieben des Innenteils 1 erleichtert werden. Im Bereich der Anbindung der Blähwände 5, 5' an die Stege 6, 6' weisen die Stege 6, 6', wie ebenfalls aus der Figur ersichtlich, eine Taillierung 13 auf. Hierdurch wird die Dauerhaltbarkeit des Lagers in diesem Bereich weiter erhöht beziehungsweise die Gefahr eines Einreißens des Elastomers des Lagerkörpers 2 verringert.

In der Fig. 2 ist das Lager gemäß der Fig. 1 in einer axial geschnittenen Darstellung gezeigt, wobei der Schnitt parallel beziehungsweise entlang der Lagerachse 16 durch die Stege 6, 6' des Lagerkörpers 2 geführt ist. Die Darstellung zeigt das Lager nach dem Einfügen des vorzugsweise metallischen Innenteils 1, 1'. Bei dem dargestellten Ausführungsbeispiel handelt es sich um eine Ausbildungsform mit einem axial zweigeteilten Innenteil 1, 1'. Die beiden Teile beziehungsweise Segmente des Innenteils 1, 1' werden bei dieser Ausbildungsform bei der Montage des Lagers von je einem der beiden axialen Lagerenden in das Gummi-Metall-Teil 2, 3 eingeschoben. Gemäß der Erfindung weist das Innenteil 1, 1' beziehungsweise weisen dessen Segmente an den axialen Enden je eine radial nach außen gerichtete Auskragung 9, 9' auf. Im Zuge des Einschiebens des Innenteils 1, 1' beziehungsweise seiner Segmente in das Gummi-Metall-Teil 2, 3 schnappen die in die Stege 6, 6' des Lagerkörpers einvulkanisierten Stegbleche 8, 8' hinter diesen Auskragungen 9, 9' ein und fixieren das Innenteil 1, 1' bezüglich seiner axialen Lage gegenüber dem Gummi-Metall-Teil 2, 3. Das Innenteil 1, 1' ist zudem, wie ein Vergleich mit der Fig. 1 erkennen lässt, mit einem Übermaß gegenüber dem Gummi-Metall-Teil 2, 3, insbesondere gegenüber dessen Stegen 6, 6' ausgebildet. Hierdurch wird beim Einfügen des Innenteils über die Stegbleche 6, 6' eine Vorspannung auf die Stege des Lagerkörpers 2 aufgebracht, welche zur Erhöhung der Standfestigkeit beziehungsweise der Dauerlaufhaltbarkeit des Lagerkörpers 2 im Bereich der Stege 6, 6' führt. In der Darstellung zu erkennen sind ferner die in den radial äußeren Bereichen der Stege 6, 6' einvulkanisierten Armierungselemente, von denen eines, wie bereits ausgeführt, als Kanalträger 10 für den die Blähkammern 4, 4' miteinander verbindenden Kanal 11 ausgebildet ist.

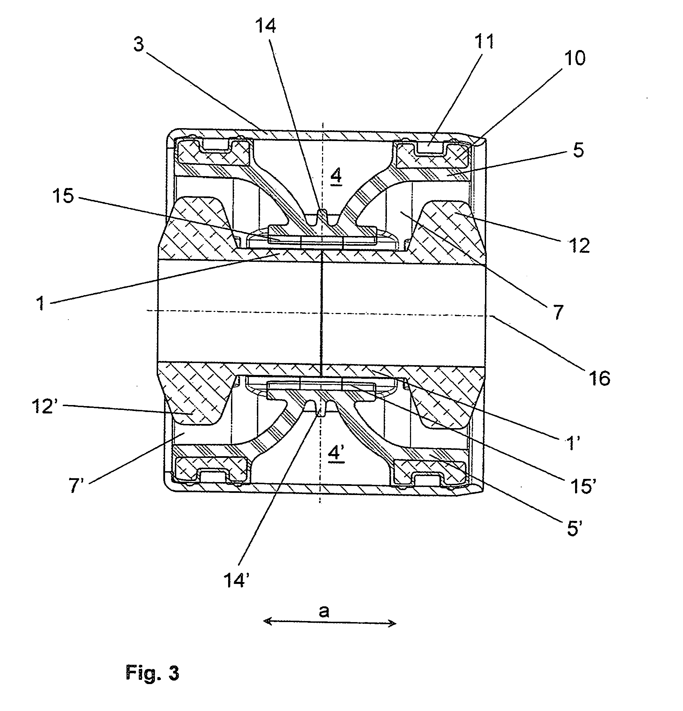

In der Fig. 3 ist die zuvor erläuterte Ausbildungsform des erfindungsgemäßen Lagers nochmals in einer axial geschnittenen Darstellung gezeigt, wobei hier der Schnitt parallel beziehungsweise entlang der Lagerachse 16 durch die Blähkammern 4, 4' geführt ist. Die Darstellung verdeutlicht besonders gut die Beschaffenheit der die Blähkammern 4, 4' gegenüber den axial beidseitig angeordneten Nieren 7, 7' begrenzenden Blähwände 5, 5'. Die Blähwände 5, 5' erstrecken sich vom Lagerinnern mit einem gewölbten Verlauf nach radial und axial außen. Ferner ist ersichtlich, dass das bei den Erläuterungen zur Fig. 1 und Fig. 2 schon erwähnte Armierungselement, welches abschnittsweise als Kanalträger 11 für den Kanal 10 ausgebildet ist, auch durch den Lagerkörper 2 hindurch verläuft, aber im Bereich der Blähkammern 4, 4' ausgeschnitten ist. In der Fig. 2 ebenfalls ersichtlich ist die zweigeteilte Ausbildung des Innenteils 1, 1'. Außerdem ist zu erkennen, dass durch entsprechende Ausformungen an den axialen Enden des Innenteils 1, 1' im Bereich der Nieren 7, 7' Radialanschläge 12, 12' ausgebildet sind, welche den Verformungsweg der Blähwände 5, 5' begrenzen und damit die Blähkammern 4, 4' vor einer Überlast schützen. Dabei ist die Höhe dieser die Radialanschläge 12, 12' ausbildenden Wölbungen vom jeweiligen Einsatzfall und der sonstigen Auslegung des Lagers abhängig. Sofern die Radialanschläge 12, 12' eine geringere Höhe als in dem gezeigten Beispiel aufweisen, ist es auch möglich, das Innenteil 1, 1' einteilig auszubilden und dieses von einem axialen Lagerende her in das Gummi-Metall-Teil 2, 3 einzuschieben. Dabei wird das Einschieben des Innenteils 1, 1' durch ein radiales nach außen Ziehen der Blähwände 5, 5' mittels der schon zur Fig. 1 erläuterten, am Kammerfuß 15, 15' ausgebildeten Nippels 14, 14' unterstützt. Eine einteilige Ausbildung des Innenteils 1, 1' ist aber auch möglich, wenn die Radialanschläge 12, 12' mittels eines separaten, an den axialen Lagerenden auf das Innenteil aufgeschobenen Elements realisiert werden.

### Bezugszeichenliste

- 1, 1': Innenteil
- 2: Lagerkörper
- 3: Außenhülse
- 4, 4': Blähkammer
- 5, 5': Blähwand
- 6, 6': Steg
- 7, 7': Niere
- 8, 8': Stegblech
- 9, 9': Auskragung
- 10: Kanalträger
- 11: Kanal
- 12,12': Radialanschlag
- 13: Taillierung bzw. Taille
- 14, 14': Nippel
- 15, 15': Fußabschnitt bzw. Kammerfuß
- 16: Lagerachse

- a: axiale Richtung
- r: radiale Richtung
- u: Umfangsrichtung

## Patentansprüche

1. Elastomeres Buchsenlager mit hydraulischer Dämpfung, mit einem rohr- oder zylinderförmigen Innenteil (1, 1'), einer das Innenteil (1, 1') umgebenden Außenhülse (3), einem zwischen dem Innenteil (1, 1') und der Außenhülse (3) angeordneten elastomeren Lagerkörper (2) sowie mindestens einem Paar in dem Lagerkörper (2) oder zwischen dessen Außenkontur und der Außenhülse (3) ausgebildeter, bezüglich der Lagerumfangsrichtung (u) gegeneinander versetzt angeordneter Blähkammern (4, 4') zur Aufnahme eines fluiden Dämpfungsmittels, welche als aktive Arbeitskammern arbeiten und das Dämpfungsmittel bei aus radialer Richtung (r) auf sie einwirkenden Druckkräften über mindestens einen sie miteinander verbindenden Kanal (11) in die jeweils andere Blähkammer (4', 4) pumpen, wobei die Blähkammern (4, 4') in der Lagerumfangsrichtung (u) durch zwischen dem Innenteil (1, 1') und der Außenhülse (3) ausgebildete Stege (6, 6') des Lagerkörpers (2) räumlich voneinander getrennt und axial beidseitig durch sich von den axialen Lagerenden in axialer Richtung (a) in das Lager hinein erstreckende Nieren (7, 7') begrenzl sind, von denen sie durch aus dem Lagerinnern radial und axial gewölbt nach außen verlaufende, von dem Elastomer des Lagerkörpers (2) gebildete Blähwände (5, 5') getrennt sind, wobei die Blähwände (5, 5') nur in einem radial äußeren Bereich an die Stege (6, 6') angebunden, im Übrigen aber über ihre gesamte radiale und axiale Erstreckung sowohl gegenüber den Stegen (6, 6'), als auch gegenüber dem Innenteil (1, 1') freigestellt sind, dadurch gekennzeichneit, dass die Außenhülse (3) und der durch Vulkanisation mit ihr verbundene Lagerkörper (2) ein separates Bauteil ausbilden, in welches das an seinen axialen Enden je eine nach radial außen gerichtete Auskragung (9, 9') aufweisende Innenteil (1, 1') eingeschoben ist, so dass die Auskragungen (9, 9') des Innenteils (1, 1') von in die Stege (6, 6') des Lagerkörpers (2) einvulkanisierten Stegblechen (8, 8') hintergriffen und die Stege (6, 6') von dem mit einem Übermaß ausgebildeten Innenteil (1, 1') über die Stegbleche (8, 8') mit einer Vorspannung beaufschlagt werden.

2. Elastomeres Buchsenlager nach Anspruch 1, **dadurch gekennzeichnet, dass** das Innenteil (1, 1') axial zweigeteilt ausgebildet.

3. Elastomeres Buchsenlager nach Anspruch 2, **dadurch gekennzeichnet, dass** das die Auskragungen (9, 9') bildende Material des Innenteils (1, 1') auf der axial inneren Seite der jeweiligen Auskragung (9, 9') nochmals nach radial innen gegen die Stegbleche (8, 8') zurückgeschlagen ist.

4. Elastomeres Buchsenlager nach einem der Ansprüche 1 bis 3, **dadurch gekennzeichnet, dass** in den Nieren (7, 7') Radialanschläge (12, 12') angeordnet sind, wobei diese als integraler Bestandteil des Innenteils (1, 1') durch an dessen axialen Enden radial nach außen aufragende Erhebungen oder Aufwölbungen ausgebildet sind.

5. Elastomeres Buchsenlager nach einem der Ansprüche 1 bis 3, **dadurch gekennzeichnet, dass** auf die axialen Enden des Innenteils (1, 1') zur Ausbildung von in den Nieren (7, 7') angeordneten Axialanschlägen (12, 12') ein Ring aus Kunststoff oder einem metallischen Material aufgeschoben ist.

6. Elastomeres Buchsenlager nach einem der Ansprüche 1 bis 3, **dadurch gekennzeichnet, dass** auf die axialen Enden des Innenteils (1, 1') zur Ausbildung von in den Nieren (7, 7') angeordneten Axialanschlägen (12, 12') ein Ring aus einem Elastomer oder einem mit einem Elastomer belegten Kunststoff oder Metall aufgeschoben ist.

7. Elastomeres Buchsenlager nach einem der Ansprüche 1 bis 6, **dadurch gekennzeichnet, dass** der die Blähkammern (4, 4') miteinander verbindende Kanal (11) in einem als Armierung in den Lagerkörper (2) einvulkanisierten Kanalträger (10) angeordnet ist, wobei die Blähwände (5, 5') im Bereich dieses Kanalträgers (10) an die Stege (6, 6') angebunden sind.

8. Elastomeres Buchsenlager nach Anspruch 1 oder 7, **dadurch gekennzeichnet, dass** die Stege (6, 6') im Bereich der Anbindung der Blähwände eine Taille (13) aufweisen, indem die aufgrund der Freistellung der Blähwände (5, 5') zwischen ihnen und den Stegen (6, 6') ausgebildeten Freiräume in diesem Bereich in die Stege (6, 6') hineinragen.

9. Elastomeres Buchsenlager nach einem der Ansprüche 1 bis 8, **dadurch gekennzeichnet, dass** an oder in dem Lagerkörper (1, 1') ein zusätzlicher Bypasskanal ausgebildet ist, in welchem ein Sperrelement angeordnet ist, das diesen Bypasskanal nur freigibt, sofern die radiale Belastung der Blähkammern (4, 4') ein vorgegebenes Belastungsmaximum übersteigt.

10. Elastomeres Buchsenlager nach einem der Ansprüche 1 bis 9, **dadurch gekennzeichnet, dass** in die Stege (6, 6') zur Einstellung ihres radialen Steifigkeitsverhaltens zusätzliche Zwischenbleche einvulkanisiert sind.

11. Elastomeres Buchsenlager nach einem der Ansprüche 1 bis 10, **dadurch gekennzeichnet, dass** in einem axial mittleren Bereich der Blähkammern (4, 4'), vorzugsweise in ihrem jeweiligen Fußabschnitt (15, 15'), ein radial nach außen aufragender Nippel (14, 14') angeordnet ist.

12. Elastomeres Buchsenlager nach Anspruch 11, **dadurch gekennzeichnet, dass** der Nippel (14, 14') durch eine entsprechende Profilierung der jeweiligen Blähwand (5, 5') ausgebildet ist.

## Claims

1. Elastomeric sleeve mount with hydraulic damping, with a tubular or cylindrical inner part (1, 1'), with an outer sleeve (3) surrounding the inner part (1, 1'), with an elastomeric mount body (2) arranged between the inner part (1, 1') and the outer sleeve (3), and with at least one pair of inflatable chambers (4, 4') for receiving a fluid damping medium, which are formed in the mount body (2) or between the outer contour of the said mount body and the outer sleeve (3) and are arranged so as to be offset in relation to one another with respect to the mount circumferential direction (u) and which operate as active working chambers and, under pressure forces acting upon them from the radial direction (r), pump the damping medium in each case into the other inflatable chamber (4', 4) via at least one duct (11) connecting them to one another, the inflatable chambers (4, 4') being spatially separated from one another in the mount circumferential direction (u) by webs (6, 6') of the mount body (2) which are formed between the inner part (1, 1') and the outer sleeve (3), and being delimited axially on both sides by kidneys (7, 7') which extend into the mount in the axial direction (a) from the axial mount ends and from which the said inflatable chambers are separated by inflatable walls (5, 5') running out of the mount interior outwards in a radially and axially curved manner and which are formed by the elastomer of the mount body (2), the inflatable walls (5, 5') being tied to the webs (6, 6') in a radially outer region only, but otherwise being freed over their entire radial and axial extent both with respect to the webs (6, 6') and with respect to the inner part (1, 1'), **characterized in that** the outer sleeve (3) and the mount body (2) connected to it by vulcanization form a separate component, into which is pushed the inner part (1, 1') having at each of its axial ends a radially outward-directed protuberance (9, 9'), so that web plates (8, 8') vulcanized into the webs (6, 6') of the mount body (2) engage behind the protuberances (9, 9') of the inner part (1, 1'), and the webs (6, 6') are acted upon via the web plates (8, 8') with a prestress by the inner part (1, 1') which is designed with oversize.

2. Elastomeric sleeve mount according to Claim 1, **characterized in that** the inner part (1, 1') is of axially bisected design.

3. Elastomeric sleeve mount according to Claim 2, **characterized in that** the material, forming the protuberances (9, 9'), of the inner part (1, 1') is knocked back again radially inwards against the web plates (8, 8') on the axially inner side of the respective protuberance (9, 9').

4. Elastomeric sleeve mount according to one of Claims 1 to 3, **characterized in that** the kidneys (7, 7') have arranged in them radial stops (12, 12'), these being formed as an integral part of the inner part (1, 1') by elevations or bulges projecting radially outwards at the axial ends of the said inner part.

5. Elastomeric sleeve mount according to one of Claims 1 to 3, **characterized in that** a ring made from plastic or from a metallic material is pushed onto the axial ends of the inner part (1, 1') so as to form axial stops (12, 12') arranged in the kidneys (7, 7').

6. Elastomeric sleeve mount according to one of Claims 1 to 3, **characterized in that** a ring made from an elastomer or from an elastomer-covered plastic or metal is pushed onto the axial ends of the inner part (1, 1') so as to form axial stops (12, 12') arranged in the kidneys (7, 7').

7. Elastomeric sleeve mount according to one of Claims 1 to 6, **characterized in that** the duct (11) connecting the inflatable chambers (4, 4') to one another is arranged in a duct carrier (10) vulcanized as reinforcement into the mount body (2), the inflatable walls (5, 5') being tied to the webs (6, 6') in the region of this duct carrier (10).

8. Elastomeric sleeve mount according to Claim 1 or 7, **characterized in that** the webs (6, 6') have a waist (13) in the region of the tie-up of the inflatable walls, **in that** the free spaces formed on account of the freeing of the inflatable walls (5, 5') between these and the webs (6, 6') project into the webs (6, 6') in this region.

9. Elastomeric sleeve mount according to one of Claims 1 to 8, **characterized in that** the mount body (1, 1') has formed on it or in it an additional bypass duct in which is arranged a shut-off element which releases this bypass duct only in so far as the radial load upon the inflatable chambers (4, 4') overshoots a stipulated load maximum.

10. Elastomeric sleeve mount according to one of Claims 1 to 9, **characterized in that** additional intermediate plates are vulcanized into the webs (6, 6') so as to adjust their radial rigidity behaviour.

11. Elastomeric sleeve mount according to one of Claims 1 to 10, **characterized in that** a radially outward-projecting nipple (14, 14') is arranged in an axially central region of the inflatable chambers (4, 4'), preferably in their respective foot portion (15, 15').

12. Elastomeric sleeve mount according to Claim 11, **characterized in that** the nipple (14, 14') is formed by a corresponding profiling of the respective inflatable wall (5, 5').

## Revendications

1. Palier à douille élastomère à amortissement hydraulique comprenant une partie interne de forme tubulaire ou cylindrique (1, 1'), une douille externe (3) entourant la partie interne (1, 1'), un corps de palier élastomère (2) disposé entre la partie interne (1, 1') et la douille externe (3), ainsi qu'au moins une paire de chambres gonflables (4, 4') réalisées dans le corps de palier (2) ou entre son contour extérieur et la douille externe (3), disposées de manière décalée l'une par rapport à l'autre par rapport à la direction périphérique du palier (u), pour recevoir un agent d'amortissement fluide, lesquelles fonctionnent en tant que chambres de travail actives et pompent l'agent d'amortissement par le biais d'au moins un canal (11) les reliant l'une à l'autre dans l'autre chambre gonflable respective (4', 4), lorsque des forces de pression agissent dans la direction radiale (r) sur celles-ci, les chambres gonflables (4, 4') étant séparées spatialement l'une de l'autre dans la direction périphérique du palier (u) par des nervures (6, 6') du corps de palier (2) réalisées entre la partie interne (1, 1') et la douille externe (3) et étant limitées axialement des deux côtés par des parties en forme de haricot (7, 7') s'étendant depuis les extrémités de palier axiales dans la direction axiale (a) à l'intérieur du palier, desquelles elles sont séparées par des parois gonflables (5, 5') s'étendant depuis l'intérieur du palier sous forme courbée radialement et axialement vers l'extérieur, formées par le matériau élastomère du corps de palier (2), les parois gonflables (5, 5') étant raccordées uniquement dans une région radialement externe aux nervures (6, 6'), mais étant libres par ailleurs sur toute leur étendue radiale et axiale, tant par rapport aux nervures (6, 6') que par rapport à la partie interne (1, 1'), **caractérisé en ce que** la douille externe (3) et le corps de palier (2) connecté à celle-ci par vulcanisation constituent un composant séparé, dans lequel est enfoncée la partie interne (1, 1') présentant à ses extrémités axiales à chaque fois une saillie (9, 9') orientée radialement vers l'extérieur, de sorte que les saillies (9, 9') de la partie interne (1, 1') soient saisies par l'arrière par des tôles formant nervure (8, 8') vulcanisées dans les nervures (6, 6') du corps de palier (2), et que les nervures (6, 6') soient sollicitées avec une précontrainte par le biais des tôles formant nervure (8, 8') par la partie interne (1, 1') réalisée avec un surdimensionnement.

2. Palier à douille élastomère selon la revendication 1, **caractérisé en ce que** la partie interne (1, 1') est réalisée de manière divisée en deux axialement.

3. Palier à douille élastomère selon la revendication 2, **caractérisé en ce que** le matériau de la partie interne (1, 1') formant les saillies (9, 9') est retourné du côté axialement interne de la saillie respective (9, 9') encore une fois radialement vers l'intérieur contre les tôles formant nervure (8, 8').

4. Palier à douille élastomère selon l'une quelconque des revendications 1 à 3, **caractérisé en ce que** des butées radiales (12, 12') sont disposées dans les parties en forme de haricot (7, 7'), lesquelles butées font partie intégrante de la partie interne (1, 1') sous forme de rehaussements ou de courbures saillant radialement vers l'extérieur au niveau des extrémités axiales de la partie interne.

5. Palier à douille élastomère selon l'une quelconque des revendications 1 à 3, **caractérisé en ce que** sur les extrémités axiales de la partie interne (1, 1'), pour réaliser des butées axiales (12, 12') disposées dans les parties en forme de haricot (7, 7'), est enfilée une bague en plastique ou en un matériau métallique.

6. Palier à douille élastomère selon l'une quelconque des revendications 1 à 3, **caractérisé en ce que** sur les extrémités axiales de la partie interne (1, 1'), pour réaliser des butées axiales (12, 12') disposées dans les parties en forme de haricot (7, 7'), est enfilée une bague en élastomère ou en un plastique ou un métal revêtu d'élastomère.

7. Palier à douille élastomère selon l'une quelconque des revendications 1 à 6, **caractérisé en ce que** le canal (11) reliant l'une à l'autre les chambres gonflables (4, 4') est disposé dans un support de canal (10) vulcanisé en tant que renfort dans le corps de palier (2), les parois gonflables (5, 5') étant reliées aux nervures (6, 6') dans la région de ce support de canal (10).

8. Palier à douille élastomère selon l'une quelconque des revendications 1 ou 7, **caractérisé en ce que** les nervures (6, 6') présentent, dans la région de la liaison des parois gonflables, une taille (13), grâce à laquelle les espaces libres réalisés du fait de la partie libre des parois gonflables (5, 5') entre elles et les nervures (6, 6') pénètrent dans cette région dans les nervures (6, 6').

9. Palier à douille élastomère selon l'une quelconque des revendications 1 à 8, **caractérisé en ce que** sur ou dans le corps de palier (1, 1') est réalisé un canal de dérivation supplémentaire, dans lequel est disposé un élément de verrouillage, qui ne libère ce canal de dérivation que si la contrainte radiale des chambres gonflables (4, 4') dépasse un maximum de contrainte prédéfini.

10. Palier à douille élastomère selon l'une quelconque des revendications 1 à 9, **caractérisé en ce que** des tôles intermédiaires supplémentaires sont vulcanisées dans les nervures (6, 6') pour ajuster leur caractéristique de rigidité radiale.

11. Palier à douille élastomère selon l'une quelconque des revendications 1 à 10, **caractérisé en ce qu'**un mamelon (14, 14') saillant radialement vers l'extérieur est disposé dans une région axialement centrale des chambres gonflables (4, 4'), de préférence dans leur section de base respective (15, 15').

12. Palier à douille élastomère selon la revendication 11, **caractérisé en ce que** le mamelon (14, 14') est réalisé par un profilage correspondant de la paroi gonflable respective (5, 5').
